# EUROPÄISCHE PATENTSCHRIFT

(11) **EP 2 440 805 B1**
(45) Veröffentlichungstag und Bekanntmachung des Hinweises auf die Patenterteilung: **11.05.2016**
(21) Anmeldenummer: 10737228.6
(22) Anmeldetag: 14.06.2010
(51) Int. Cl.: F16D 23/04

(54) **KALIBRIERVORRICHTUNG UND VERFAHREN ZUM KALIBRIEREN**
CALIBRATION DEVICE AND METHOD OF CALIBRATION
DISPOSITIF DE CALIBRAGE ET MÉTHODE DE CALIBRAGE

(30) Priorität: 12.06.2009 AT 9042009
(43) Veröffentlichungstag der Anmeldung: 18.04.2012
(73) Patentinhaber: Miba Sinter Austria GmbH, 4663 Laakirchen (AT)
(72) Erfinder: KRONBERGER, Christian, 4655 Vorchdorf (AT)
(74) Vertreter: Burger, Hannes
(86) Internationale Anmeldenummer: PCT/AT2010/000215
(87) Internationale Veröffentlichungsnummer: WO 2010/141972

(56) Entgegenhaltungen:
- EP-A1- 1 389 694
- WO-A1-02/31374
- AT-U1- 5 886
- AT-U1- 9 818
- DE-A1- 4 203 540
- DE-A1- 4 418 632
- DE-C1- 19 741 613
- JP-A- 10 216 887

## Beschreibung

Die Erfindung betrifft eine Kalibriervorrichtung zum Kalibrieren einer pulvermetallurgisch hergestellten, eine Innenverzahnung mit axial verlaufenden Zähnen aufweisende Schiebemuffe für eine Getriebe-Synchronisiereinrichtung eines Schaltgetriebes, umfassend ein Gesenk mit einer Ausnehmung zur Aufnahme der Schiebemuffe, eine obere Pressform und eine untere Pressform, die linear bewegbar in der bzw. in die Ausnehmung des Gesenks angeordnet sind, wobei die obere Pressform und/oder die untere Pressform zwischen einer Offenstellung und einer Kalibrierstellung bewegbar gehaltert sind, und wobei die untere Pressform eine Auswerferhülse bzw. einen Unterstempel und einen konzentrisch dazu angeordneten, relativ zur Auswerferhülse bzw. zum Unterstempel bewegbaren unteren Kernstift, mit einer zur Innenverzahnung der kalibrierten Schiebemuffe komplementären Außenverzahnung, aufweist, sowie ein Verfahren zum Kalibrieren einer pulvermetallurgisch hergestellten, eine Innenverzahnung mit axial verlaufenden Zähnen aufweisenden Schiebemuffe für eine Getriebe-Synchronisiereinrichtung eines Schaltgetriebes durch teilweise plastische Umformung, wobei die Zähne einen Zahnkörper mit jeweils zwei, Keile mit Keilflächen aufweisende distale Endbereiche aufweist.

Bekanntlich werden Schiebemuffen, die in der Literatur oft auch als Schaltmuffen bezeichnet werden, bei Schaltgetrieben dazu verwendet, um den Schaltvorgang - abgesehen von der Betätigung der Schiebemuffe beispielsweise durch den Fahrer - und in der Folge die Synchronisation des jeweiligen Gangzahnrades einzuleiten. Dazu weisen diese Schiebemuffen an der Innenseite eine Innenverzahnung auf, wobei die Zähne an den einander gegenüberliegenden distalen Enden normalerweise keilförmig mit Keilflächen bzw. Dachschrägen ausgebildet sind, um damit das Eingleiten der Verzahnungen des Synchronringes und des Kupplungskörpers zur Drehzahlangleichung des gewünschten Gangzahnrades zu ermöglichen bzw. zu erleichtern. Bezüglich dieser Endgestaltung der Zähne wurden im Stand der Technik bereits unterschiedlichste Formen beschrieben.

So ist zB aus der DE 102 47 330 A1 eine pulvermetallurgisch hergestellte Schaltmuffe bekannt, bestehend aus einem Muffenkörper mit Klaueninnenverzahnung, Stirnflächen und mit zumindest über eine Stirnfläche überstehenden Zähnen mit Dachfirsten, Dachschrägen und Nebenflächen, wobei die Dachfirste und Dachschrägen in radialer Richtung nach außen bis maximal zum Fußkreis reichen und wobei die Nebenflächen als Mantelflächen eines Kegelsegmentes oder als Mantelflächen eines Kegelsegmentes und ein oder mehrerer Kegelstumpfsegmente ausgebildet sind.

Ähnlich dazu beschreibt die DE 103 07 490 B4 eine gesinterte Schiebemuffe mit seitlichen Stirnflächen und Klaueninnenverzahnung, deren Zähne Zahn-Innenflächen mit durch den Fußkreis begrenzter Zahntiefe und daran axial beidseitig angrenzender Zahn-Nebenflächen aufweisen, wobei letztere sich vom Fußkreis aus radial sowohl nach innen als auch nach außen erstrecken und gegen die Stirnflächen abgesetzt sind und wobei die axiale Erstreckung der stirnseitigen Zahn-Nebenflächen ausgehend von der Grenze zur Zahn-Innentlächen jeweils vor oder in der Ebene der Stirnflächen endet, und wobei die ab dem Fußkreis radial nach außen angrenzenden Nebenflächen jeweils aus einer Zentralzone und beidseitig symmetrisch angrenzenden Flankenzonen bestehen, und wobei die Fläche der Zentralzone sich in Radialrichtung zum Fußkreis hin verjüngt und die Flankenzonen als von der Zentralzone in Axialrichtung nach innen abfallende, gekrümmte Flächen ausgebildet sind, die auf Radiushöhe des Fußkreises, gemeinsam mit der Zahn-Innenfläche eine Anschlagfläche begrenzen.

Obwohl die Sintertechnik aufgrund der durchweg komplexen Geometrie der Innenverzahnung von Schiebemuffen deutliche Vorteile aufweist, werden im Stand der Technik auch Schiebemuffen beschrieben, die aus Blechteilen hergestellt werden.

Aufgrund dieser komplexen Geometrie beschreibt der Stand der Technik beispielsweise in der DE 39 08 989 A1 weiters Schiebemuffen, die aus mehreren Einzelbauteilen durch Fügen miteinander hergestellt sind.

Hinsichtlich der sintertechnischen Herstellung von Schiebemuffen sei stellvertretend auf die DE 603 16 878 T2 verwiesen, die eine Pressformvorrichtung für eine Synchronmuffe beschreibt, die an ihrem Innenumfang mit Zähnen einer ersten Innenkeilverzahnung für einen Zahneingriff mit einem Kupplungszahnrad eines Schaltgetriebes und Zähnen einer zweiten Innenkeilverzahnung zur Synchronisation ausgebildet ist, wobei die Zähne der zweiten Innenkeilverzahnung in der axialen Richtung kürzer als die Zähne der ersten Innenkeilverzahnung sind und zwischen den Zähnen der Innenkeilverzahnung in einer Umfangrichtung positioniert sind, sodass sie in Eingriff mit einem Synchronring gebracht werden können. Diese Pressformvorrichtung weist weiters auf: ein paar von oberer und unterer Pressformen von denen eine der Pressformen mit Zähnen einer ersten und einer zweiten Außenkeilverzahnung vorgesehen ist, die ausgebildet sind, dass sie mit den Zähnen der ersten und der zweiten Innenkeilverzahnung der Synchronmuffe gekoppelt werden, wobei die Zähne der ersten Außenkeilverzahnung der Pressform an ihren einem Ende mit einem ersten abschrägungsbildenden Abschnitt zum Bilden eines Paares von Abschrägungen an jedem distalen Ende der Zähne der ersten Innenkeilverzahnung der Synchronmuffe ausgebildet sind und die Zähne der zweiten Außenkeilverzahnung der Pressform an ihrem einen Ende mit einem zweiten abschrägungsbildenden Abschnitt, der in einer Tiefe kleiner ist als der erste abschrägungsbildende Abschnitt, zum Ausbilden eines Paares von Abschrägungen an jedem distalen Ende der Zähne der zweiten Innenkeilverzahnung der Synchronmuffe ausgebildet sind, wobei ein Abschnitt mit kleinem Durchmesser des zweiten abschrägungsbildenden Abschnitts kleiner als ein Abschnitt mit kleinem Durchmesser des ersten abschrägungsausbildenden Abschnitts ausgebildet ist und wobei die Synchronmuffe in einem Zustand gepresst wird, in dem die Zähne der ersten und der zweiten Innenkeilverzahnung der Synchronmuffe an ihren einen Enden vertikal mit den Zähnen der ersten und der zweiten Außenkeilverzahnung der Pressform gekoppelt wurden um dadurch jeweils ein Paar von Abschrägungsoberflächen an den distalen Enden der Zähne der ersten und der zweiten Innenkeilverzahnung der Synchronmuffe auszubilden und die Zähne der zweiten Innenkeilverzahnung der Synchronmuffe in der axialen Länge kürzer als die Zähne der ersten Innenkeilverzahnung der Synchronmuffe auszubilden.

Aus der JP 10-216887 A sind ein Pressverfahren sowie eine Presse zur Herstellung einer Schaltmuffe aus einem Rohling bekannt, wonach über einen Unter- und einen Oberstempel mit entsprechender Formflächengeometrie die Klauenverzahnung mit Dachschrägen in der Schaltmuffe geformt wird. Die beiden Stempel sind zueinander verstellbar in einem Gesenk gehalten.

Die an das Sintern anschließende Kalibrierung von sintertechnisch hergestellten Schiebemuffen erfordert üblicherweise relativ hohe Pressdrücke. Aufgrund des dabei auftretenden Kräfteprofils stellt dies ein nicht zu unterschätzendes Herstellungsproblem dar, das zu erhöhtem Ausschuss führen kann.

Aufgabe der Erfindung ist es daher, eine Vorrichtung sowie ein Verfahren anzugeben, die diesem Problem abhelfen.

Zur Lösung dieser Aufgabe ist bei der erfindungsgemäßen Kalibriervorrichtung vorgesehen, dass die obere Pressform eine Presshülse und einen konzentrisch dazu angeordneten, relativ zur Presshülse bewegbaren oberen Kernstift, mit einer zur Innenverzahnung der kalibrierten Schiebemuffe komplementären Außenverzahnung aufweist, wobei die Schiebemuffe zwischen der Presshülse und der Auswerferhülse eingespannt ist bzw. verpressbar ist und wobei in der Geschlossenstellung, d.h. der Kalibrierstellung, der obere Kernstift unter Ausbildung eines Spaltes beabstandet zum unteren Kernstift angeordnet ist. Weiters ist bei dem erfindungsgemäßen Verfahren vorgesehen, dass das während der plastischen Umformung verdrängte Material in einen Mittenbereich zwischen den distalen Endbereichen des Grundkörpers der Zähne verbracht wird, sodass die Zähne in diesem Bereich mit einem Wulst ausgebildet werden und dass daran anschließend eine mechanische Nachbearbeitung zur Entfernung des Wulstes durchgeführt wird.

Durch die Form der Dachschrägen wird es möglich, höhere Pressdrücke anzuwenden, wodurch die sintertechnische Herstellung dieser Schiebemuffen auch mit höherer Dichte der Verzahnung verbessert werden kann. Durch diese höhere Dichte kann auch die Standzeit der Schiebemuffe verbessert werden. Insbesondere ist auch durch die Form der Dachschrägen ein besseres Schaltgefühl erzielbar, das heißt dass die Schaltung leichtgängiger wird. Durch das geteilte Werkzeug wird es entsprechend dem erfindungsgemäßen Verfahren möglich, dass das bei der Kalibrierung verdrängte Material in den Spalt zwischen der oberen und der unteren Pressform austritt, wodurch wiederum höhere Pressdrücke ohne Beschädigung der Dachschrägen angewandt werden können und damit auch höhere Dichten in der Schiebemuffe erreichbar sind. Durch die Umformung der Dachschrägen in die erfindungsgemäße Form wird auch dem Abscherungsproblem, nachdem diese Dachschrägen hinter der Anlauffläche stehen, abgeholfen. Es kann also die Abscherung an den Mantelflächen minimiert werden. Nachdem die Schiebemuffe üblicherweise oberflächlich im Bereich der Innenverzahnung nachgearbeitet wird, insbesondere mechanisch nachgearbeitet wird, führt auch die Wulstausbildung zu keiner bzw. keiner wesentlichen Verteuerung der Herstellung derartiger Schiebemuffen, da die Wülste an den Zahnoberflächen im Rahmen dieser mechanischen Nachbearbeitung entfernt werden. Durch die Form der distalen Enden der Innenverzahnung der Schiebemuffe wird die presstechnische Herstellung der Schiebemuffe verbessert, sodass die Pressstempel eine höhere Standzeit erreichen.

Gemäß einer Ausführungsvariante der Erfindung ist vorgesehen, dass der Spalt eine Breite aufweist, die ausgewählt ist aus einem Bereich mit einer unteren Grenze von 0,1 mm, insbesondere 0,2 mm, vorzugsweise 0,25 mm, und einer oberen Grenze von 10 mm, insbesondere 9 mm, vorzugsweise 7,5 mm. Es konnte mit derartigen Spaltbreiten beobachtet werden, dass der Materialfluss während der plastischen Umformung der Dachschrägen verbessert werden kann und das Aufbauen des Wulstes im Spalt erleichtert wird, sodass also die plastische Umformung insgesamt vereinfacht werden kann.

Im Hinblick auf die mechanische Nachbearbeitung, insbesondere die Entfernung des Wulstes von der Zahnoberfläche, ist es von Vorteil, wenn der Spalt in der Geschlossenstellung, d.h. der Kalibrierstellung, bezogen auf die axiale Breite der Schiebemuffe außermittig angeordnet ist. Es wird damit die Zugänglichkeit für Werkzeuge in den Bereich des Wulstes vereinfacht. Insbesondere ist dies von Vorteil, da im Bereich des Wulstes ein erhöhter Materialabtrag erforderlich ist.

Es kann auch vorgesehen sein, dass die Zähne der Innenverzahnung der Schiebemuffe an den distalen Enden Keile mit Keilflächen aufweisen und der Spalt in einem Abstand zur Spitze der Keilflächen eines distalen Endes der Zähne angeordnet ist, der ausgewählt ist aus einem Bereich mit einer unteren Grenze von 1 mm, insbesondere 3 mm, vorzugsweise 5 mm, und einer oberen Grenze von 20 mm, insbesondere 15 mm. Wiederum wird durch diese Ausführungsvariante die Umformbarkeit verbessert, insbesondere im Hinblick auf den Materialfluss.

Zur besseren und einfacheren Zentrierung des oberen und des unteren Kernstiftes, um damit auch die Genauigkeit der Innenverzahnung zu verbessern, kann vorgesehen sein, dass sowohl im oberen als auch im unteren Kernstift eine Ausnehmung zur Aufnahme eines Zentrierelementes angeordnet ist.

Gemäß einer Ausführungsvariante des Verfahrens ist vorgesehen, dass zwischen den Zähnen bekanntlich Zahnfüße ausgebildet werden und dass die Zahnfüße zumindest im Bereich der Ausformung des Wulstes auf dem Zahnkörper der Zähne mit einem vordefinierbaren Untermaß, also mit einer im Hinblick auf das Sollmaß kleineren Abmessung bereitgestellt werden, wodurch erreicht wird, dass es im Zahnfußbereich praktisch zu keiner bzw. zu einer geringeren Wulstbildung kommt, wodurch die Nachbearbeitung vereinfacht wird, insbesondere deswegen, da der Zahnfußbereich für Bearbeitungswerkzeuge schwerer zugänglich ist als der Bereich der Zahnflanken bzw. des Zahnkopfes.

Um noch höhere Dichten im Bereich der distalen Ende der Zähne zu erreichen ist es von Vorteil, wenn die Kalibrierung an Zähnen durchgeführt wird, die an den distalen Enden ein axiales und / oder radiales Übermaß aufweisen, sodass also mehr Material für die Verdichtung zur Verfügung steht. Es ist damit unter Umständen aber der Nachteil verbunden, dass mehr Material während der plastischen Verformung in den Wulst verdrängt wird, sodass also dieser größer ausgebildet wird, allerdings überwiegt der Vorteil, dass damit Zähne mit höheren Dichten in den distalen Enden erreicht werden diesen Nachteil.

Es kann weiteres vorgesehen sein, dass für das Kalibrieren ein Schiebemuffenrohling bereitgestellt wird, dessen Zahnfußkreis in radialer Richtung gegenüber dem Muffenkörper erhöht ausgebildet ist, d.h. dass der Zahnfußkreis einen kleineren Durchmesser aufweist als der Durchmesser des Muffenkörpers, sodass unterhalb der Keilflächen der Keile der Innenverzahnung, d.h. in radialer Richtung oberhalb dieser Keile, keilförmige Nebenflächen von weiteren Keilen angeordnet sind, und dass beim Kalibrieren die Keilflächen der Innenverzahnung stärker plastisch verformt bzw. ausschließlich diese Keilflächen plastisch verformt werden und damit die Zähne der Innenverzahnung mit einem kleineren Öffnungswinkel der Keilspitzen ausgebildet werden als die Öffnungswinkel der Keilflächen der Nebenflächen. Es wird also damit im Wesentlichen eine zweigeteilte Form der Dachschrägen der Innenverzahnung erreicht. Insbesondere ist diese Ausführungsvariante wiederum vorteilhaft im Hinblick auf die Press- bzw. Kalibriertechnik selbst, da diese Form werkzeugschonender ist.

Bevorzugt werden die Keilflächen der Nebenflächen, also die in radialer Richtung oberen Dachschrägen trapezförmig ausgebildet. Es wird mit einer derartig ausgebildeten Innenverzahnung der Schiebemuffe ein leichteres Eingleiten der Verzahnung des Synchronringes ermöglicht, sodass also der Schaltkomfort damit verbessert werden kann. Zudem haben diese trapezförmigen Keilflächen, die dadurch entstehen, dass die Flächen zwischen diesen Keilflächen bzw. Dachschrägen, welche an die axialen Stirnflächen der Schiebemuffe schließen, geneigt ausgebildet sind, wodurch die Entformbarkeit der Schiebemuffe verbessert werden kann.

Ebenfalls eine bessere Formbarkeit sowie eine Verbesserung im Hinblick auf die Standzeit der Presswerkzeuge wird damit erreicht, dass zwischen den weiteren Keilen in radialer Richtung oberhalb des Zahnfußkreises, also den weiteren Dachschrägen, im Bereich der Zahnfüße der Innenverzahnung Stege ausgebildet werden, die zumindest annähernd in Umfangsrichtung orientiert sind. Insbesondere kann damit durch die Vermeidung von spitzwinkeligen Einschnürungen im Bereich der Zahnfüße auf filigrane Werkzeuge verzichtet werden, sodass die verwendeten Werkzeuge eine längere Standzeit aufweisen. Daneben kommt es während des Entformens durch diese Ausbildung zu weniger Ausbrüchen des Materials.

Im Hinblick auf die Umformbarkeit ist es auch von Vorteil, wenn die weiteren Keile in radialer Richtung oberhalb des Zahnfußkreises einen Spitzenwinkel zwischen den beiden Keilflächen aufweisen, der um 0,1 % bis 10 % kleiner ist als der Spitzenwinkel der Keile der Zähne in radialer Richtung unterhalb des Zahnfußkreises. Es ist damit eine geringere Materialverdrängung in diesem Bereich während der Herstellung der Schiebemuffe erforderlich. Der Spitzenwinkel zwischen den beiden Keilflächen der Keile der Zähne in radialer Richtung oberhalb, und gegebenenfalls unterhalb, des Zahnfußkreises kann aus einem Bereich von 50° bis 150° ausgewählt sein.

Es sei jedoch angemerkt, dass es nicht zwingend erforderlich ist, dass der Wert der Spitzenwinkel zwischen den Keilflächen der oberen bzw. unteren Keile unterschiedlich ist.

Von Vorteil ist weiteres, wenn die Spitzen bzw. Kanten der Keile der jeweils oberhalb des Zahnfußkreises angeordneten Keile mit den Spitzen bzw. Kanten der Keile der jeweils unterhalb des Zahnfußkreises angeordneten Keile in radialer Richtung fluchtend ausgebildet werden, also in diesem Bereich keine Absetzungen vorhanden sind, wodurch in diesen spitzwinkeligen axialen Endbereichen der Keile die Werkzeugform für das Kalibrieren dieser Keile vereinfacht werden kann.

Im Hinblick auf die Standzeit der Schiebemuffe sowie das verbesserte ineinandergreifen der einzelnen Verzahnungen ist es von Vorteil, wenn sämtliche Übergänge zwischen den einzelnen Flächen der Schiebemuffe gerundet ausgeführt werden.

Dabei können die Rundungen zwischen den Flächen mit einem Radius ausgeführt werden, der ausgewählt ist aus einem Bereich mit einer unteren Grenze von 0,01 mm, insbesondere 0,1 mm, und einer oberen Grenze von 1 mm, insbesondere 0,75 mm. Insbesondere in diesem Bereich haben sich die genannten Vorteile in erhöhtem Ausmaß eingestellt.

Schließlich ist es von Vorteil, wenn die Zähne der Innenverzahnung eine Dichte von zumindest 7,3 g/cm³ zumindest im Bereich der Dachschrägen bzw. der Keile aufweisen, wodurch eine höhere Lebensdauer der Schiebemuffe im Betrieb erreicht wird. Erreicht wird diese höhere Dichte, wie bereits erwähnt, durch die Möglichkeit der Anwendung höherer Pressdrücke während des Kalibrierens.

Zum besseren Verständnis der Erfindung wird diese anhand der nachfolgenden Figuren näher erläutert.

Es zeigen jeweils in schematisch vereinfachter Darstellung:
- Fig. 1: eine Detailansicht einer erfindungsgemäßen Kalibriervorrichtung im Querschnitt;
- Fig. 2: eine Schrägansicht einer Schiebemuffe;
- Fig. 3: einen Ausschnitt aus der Innenverzahnung der Schiebemuffe nach Fig. 2 in Schrägansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

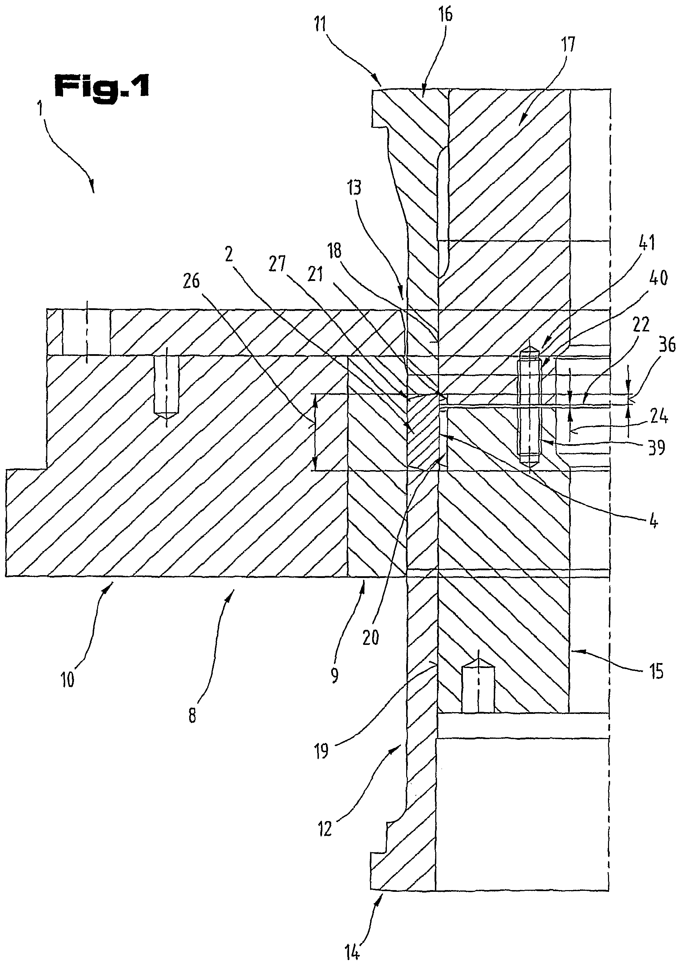

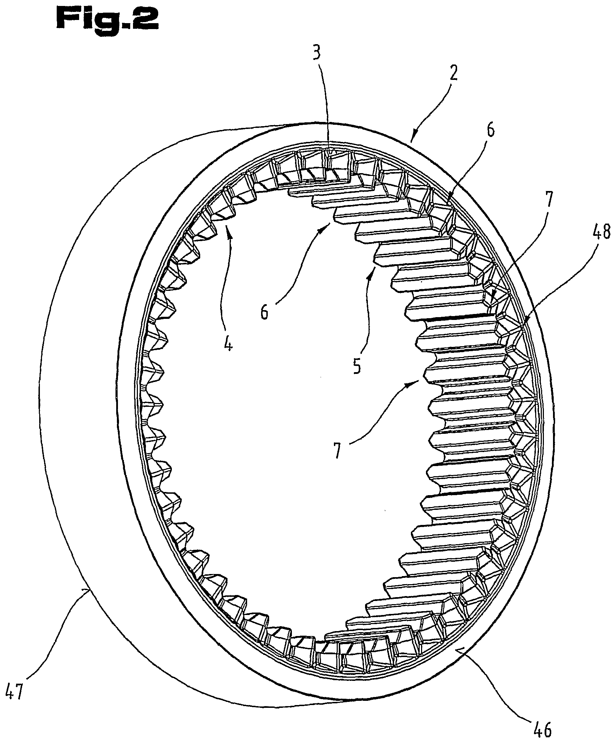

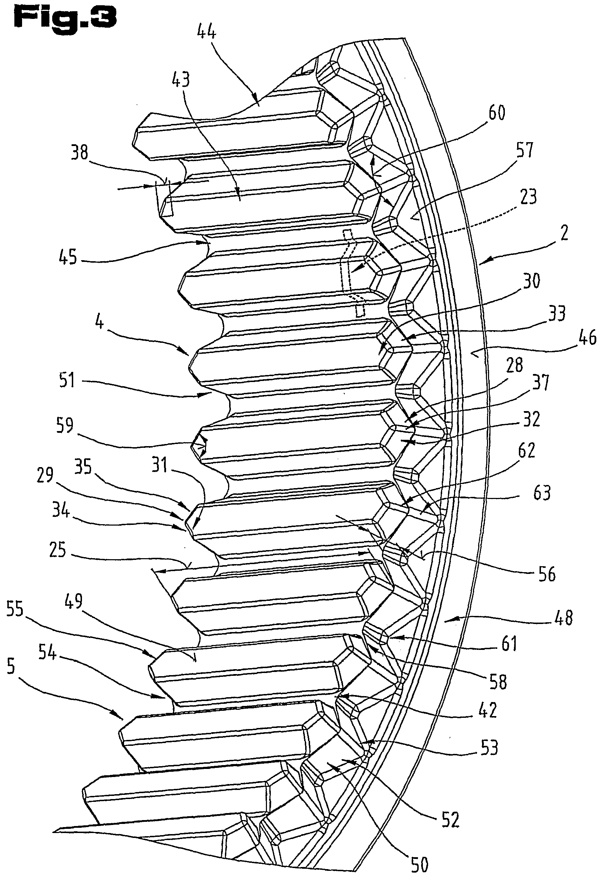

Fig. 1 zeigt einen Ausschnitt aus einer Kalibriervorrichtung 1 zum Kalibrieren einer Schiebemuffe 2, wie sie insbesondere auch in den Fig. 2 und 3 dargestellt ist. Diese Schiebemuffe 2 weist an einer inneren Oberfläche 3 eine Innenverzahnung 4 mit in axialer Richtung - bezogen auf die Schiebemuffe - sich erstreckenden Zähnen 5 auf. Diese Zähne 5 sind dabei so gestaltet, dass an beiden distalen Enden 6 Keile 7 ausgebildet sind.

Die Kalibriervorrichtung 1 umfasst ein Gesenk 8, das in diesem Fall aus einem inneren Gesenk 9 und einem äußeren Gesenk 10 zusammengesetzt ist, eine obere Pressform 11 und eine untere Pressform 12, wobei die beiden Pressformen in einer Ausnehmung 13 des Gesenks 8 linear bewegbar bzw. in diese Ausnehmung 13 bewegbar sind und wobei die obere Pressform 11 und / oder die untere Pressform 12 zwischen einer Offenstellung und einer Geschlossenstellung, d.h. der Kalibrierstellung, wie sie in Fig. 1 dargestellt ist, translatorisch bewegbar gehaltert sind. Die untere Pressform 12 umfasst eine Auswerferhülse 14, d.h. einen Unterstempel, und einen konzentrisch dazu angeordneten, relativ zur Auswerferhülse 14 bewegbaren unteren Kernstift 15. Dieser Kernstift 15 ist in der Auswerferhülse 14 angeordnet.

Die obere Pressform 11 umfasst eine Presshülse 16 und einen konzentrisch dazu angeordneten, relativ zur Presshülse 16 bewegbaren oberen Kernstift 17, wobei dieser Kernstift 17 wieder in der Presshülse 16 translatorisch bewegbar angeordnet ist. Der untere Kernstifte 15 ist bei der unteren Pressform 12 an der Auswerferhülse 14 und der obere Kernstift 16 ist bei der oberen Pressform 11 an der Presshülse 16 anliegend ausgebildet.

Sowohl der untere Kernstift 15 als auch der obere Kernstift 17 weisen an einer äußeren Oberfläche 18, 9, die jeweils der Auswerferhülse 14 bzw. der Presshülse 17 zugewandt ist, zumindest im vorderen Bereich (je nach Eindringtiefe der Kernstifte 15, 17 in die Schiebemuffe 2 während des Kalibrierens), das heißt jenen Bereichen, die auf den jeweiligen anderen Kernstift weisen seitlich, also nicht auf den einander zuweisenden Stirnseiten der Kernstifte 15,17, eine Außenverzahnung 20,21 auf, die komplementär zur Innenverzahnung 4 der Schiebemuffe 2 ausgeführt sind, sodass während des Kalibrierschrittes diese beiden Außenverzahnungen 20,21 in die Innenverzahnung 4 der Schiebemuffe 4 eingreifen.

Es erfolgt also, nachdem sowohl der untere Kernstift 15 als auch der obere Kernstift 17 translatorisch gegeneinander bewegt werden können, eine Kalibrierung der Schiebemuffe 2, insbesondere der Innenverzahnung 4 der Schiebemuffe 2, von beiden Seiten, d.h. im vorliegenden Fall von oben und von unten.

Die Schiebemuffe 2 selbst ist zwischen der Auswerferhülse 14 und der Presshülse 16 eingespannt, wie dies aus Fig. 1 ersichtlich ist. Demzufolge weisen die einander zuweisenden Stirnseiten der Auswerferhülse 14 und der Presshülse 16 die entsprechende Kontur der fertigen Schiebemuffe 2 an den Außenflächen in radialer Richtung auf.

Wie bereits erwähnt, ist in Fig. 1 lediglich jenes Detail einer Kalibriervorrichtung 1 dargestellt, welches für das Verständnis der Erfindung von Bedeutung ist. Selbstverständlich weist diese Kalibriervorrichtung 1 weitere Bauteile auf, die allerdings dem Fachmann geläufig sind, wie zB entsprechende Säulen in einem Rahmen zur Führung der Werkzeuge, entsprechende Aufnahmen für die Werkzeuge, Abstützflächen bzw. Absttitzelemente, etc., wie dies beispielsweise in der AT 009 818 U1 gezeigt ist.

Es ist also insbesondere das Gesenk 8 in einer entsprechenden Aufnahme bzw. einem Adapter aufgenommen und sind für das translatorische Verfahren der oberen Pressform 11 und der unteren Pressform 12 entsprechende Antriebsvorrichtungen, wie zB Linearmotoren, insbesondere Hydraulikzylinder, etc., vorgesehen. Diese Bauteile entsprechen dem Stand der Technik.

Das Kalibrieren von Sinterbauteilen schließt sich an die üblichen Verfahrensschritte für die pulvermetallurgische Herstellung von Bauteilen an bzw. umfasst die pulvermetallurgische Herstellung diesen Verfahrensschritt. Insbesondere werden also aus einem Presspulver, beispielsweise einem Stahlpulver, das gegebenenfalls mit entsprechenden Presshilfsmitteln, wie zB Gleitmitteln, Wachsen, etc. versehen sein kann, in einen ersten Verfahrensschritt durch Pulverpressen ein Grünling hergestellt, der in der Folge in einem üblichen Sinterofen gesintert wird bei Temperaturen, die je nach verwendetem Werkstoff als Pulver zu wählen sind, beispielsweise zwischen 900°C und 1300 °C liegen können. Nach dem Sintern erfolgt das Kalibrieren, um damit dem Bauteil eine höhere Genauigkeit hinsichtlich seiner Geometrie zu verleihen bzw. um auch Oberflächen zu glätten oder die Dichte des Bauteils lokal oder in seiner Gesamtheit zu erhöhen.

Da die pulvermetallurgische Herstellung von Bauteilen ebenfalls aus dem Stand der Technik bekannt ist, sei an dieser Stelle lediglich an den einschlägigen Stand der Technik dazu verwiesen.

Erfindungsgemäß ist nunmehr vorgesehen, dass in der Kalibriervorrichtung 1 in der Geschlossenstellung bzw. Kalibrierstellung, so wie sie in Fig. 1 dargestellt ist, zwischen dem unteren Kernstift 15 und dem oberen Kernstift 17 ein Spalt 22 ausgebildet ist, also mit anderen Worten, dass die Presswerkzeuge, das heißt die obere Pressform 11 und die untere Pressform 12 im Bereich der Kernstifte 15, 17 nicht zur Gänze schließen. Die Auswerferhülse 14 und die Presshülse 16 liegen hingegen mit ihren Stirnseiten an der Schiebemuffe 2 an, wie dies in Fig. 1 dargestellt ist. Durch die Ausbildung dieses Spaltes 22 wird erreicht, dass das während des Kalibrierens plastisch verformte Material in den Bereich des Spaltes 22 verdrängt wird und dort auf der Oberfläche der Innenverzahnung 4 ein Wulst 23 ausgebildet, wie dies in Fig. 3 angedeutet ist. (Es sei darauf hingewiesen, dass die in Fig. 3 dargestellte Wulstausbildung nur dem Verständnis der Erfindung dient, da an der fertig bearbeiteten Schiebemuffe 2 dieser Wulst 23 entfernt ist.) Durch diese Wulstausbildung ist es möglich, das Kalibrieren mit höheren Pressdrücken durchzuführen, beispielsweise mit Drücken im Bereich zwischen 4 t/cm² und 15 t/cm². Durch das Anliegen eines höheren Pressdruckes an der Schiebemuffe 2 selbst wird insbesondere der Innenverzahnung 4 der Schiebemuffen 2 eine höhere Dichte verliehen, insbesondere eine Dichte von mindestens 7,1 g/cm³, bevorzugt von mindestens 7,3 g/cm³, wodurch diese Innenverzahnung 4 mechanisch belastbarer ist und die Schiebemuffe 2 damit auch eine höhere Standzeit aufweist.

Diese beabstandete Anordnung der beiden Kernstifte 15, 17 in der Offenstellung kann durch eine entsprechende manuelle oder softwaremäßig gelöste Wegbeschränkung des Gesamtweges der Schließbewegung erreicht werden. Für die manuelle Ausführung können entsprechende Stoppelemente im Bereich oberhalb des Gesenks 8 als Anschlag für die obere Pressform 11, insbesondere den Kernstift 15, angeordnet werden. Es ist dabei auch die Anordnung von Wegsensoren bzw. Positionssensoren zur Bestimmung der Stellung des Kernstiftes 15 und/oder des Kernstiftes 17 möglich.

Vom Vorteil ist dabei, wenn dieser Spalt 22 eine Breite 24 aufweist, die ausgewählt ist, aus einem Bereich mit einer unteren Grenze von 0,1 mm, insbesondere 0,2 mm, vorzugsweise 0,25 mm, und einer oberen Grenze von 10 mm, insbesondere 9 mm, vorzugsweise 7,5 mm. Insbesondere diese Breite 24 des Spalters 22 hat sich für die plastische Umformung der Schiebemuffe 2, insbesondere zumindest in Bereichen der Innenverzahnung 4, während des Kalibrierens als vorteilhaft erwiesen. Generell kann der Spalt auch eine Breite 24 aufweisen, die ausgewählt ist, aus einem Bereich mit einer unteren Grenze von 0,20 % und einer oberen Grenze von 20 % einer maximalen Zahnlänge 25 (Fig. 3) der Zähne 5 in axialer Richtung der Schiebemuffe 2.

Bevorzugt kann diese Spaltbreite aber auch ausgewählt sein aus einem Bereich mit einer unteren Grenze von 0,05 % und einer oberen Grenze von 1,5 % der maximalen Zahnlänge 25 der Zähne 5 in axialer Richtung der Schiebemuffe 2.

Wie weiters aus Fig. 1 ersichtlich ist, ist dieser Spalt 22 in der Geschlossenstellung bezogen auf eine axiale Breite 26 der Schiebemuffe 2 außermittig angeordnet, beim Ausführungsbeispiel nach Fig. 1 insbesondere näher am vertikal oberen Rand 27 der Schiebemuffe 2. Es besteht jedoch auch die Möglichkeit, dass diese Verhältnisse gerade umgekehrt sind. Durch diese Ausführung wird erreicht, insbesondere nachdem die Auswerferhülse 14 am unteren Kernstift 15 anliegend angeordnet ist, dass das Auswerfen der vertikal angeordneten Schiebemuffe 2 vereinfacht wird, da die obere Pressform 11 einfacher von der Schiebemuffe 2 entfernt werden kann, ohne diese zu zerstören bzw. zu beschädigen. Das Auswerfen selbst der Schiebemuffe 2 erfolgt bekanntlich durch eine Aufwärtsbewegung der Auswerferhülse 14 bzw. des Unterstempels.

Hinsichtlich der beiden Kernstift 15,17 sei angemerkt, dass diese nicht zwangsweise als "Stift" im eigentlichen Sinn zu verstehen sind, sondern auch die Möglichkeit besteht, dass diese hülsenförmig ausgebildet sind, wie dies in Fig. 1 dargestellt ist. Es hat sich jedoch in der Fachsprache der Begriff "Kernstift" durchgesetzt, sodass dieser Begriff beibehalten wird. Es wird allerdings im Rahmen der Erfindung unter dem Begriff "Kernstift" auch eine hülsenförmige Ausführung dieses Stiftes verstanden.

Wie insbesondere auch die Detaildarstellung der Schiebemuffe 2 in Fig. 3 zeigt, weisen die Zähne 5 der Innenverzahnung 4 in axialer Richtung an einander gegenüberliegenden distalen Endbereichen 28,29 Keile 30,31 zur Ausbildung von Keilflächen 32 bis 35, den sogenannten Dachschrägen der Innenverzahnung 2, auf.

Bezüglich der Situierung des Spaltes 22 der Kalibriervorrichtung 1 ist es dabei von Vorteil, wenn der Spalt in einem Abstand 36 zur Keilspitze 37 der Keilflächen 32, 33 eines distalen Endbereiches 28 der Zähne 5 angeordnet ist, der ausgewählt ist aus einem Bereich mit einer unteren Grenze von 1 mm, insbesondere 3 mm, vorzugsweise 5 mm, und einer oberen Grenze von 20 mm, insbesondere 15 mm. Es wird damit eine bessere Formgebung der Dachschrägen erreicht. Generell kann dieser Abstand 36 zur Spitze der Keilflächen 32,33 aus ausgewählt sein aus einem Bereich mit einer unteren Grenze von 1 % und eine oberen Grenze von 20 % einer axialen Länge 38 der Länge der Keile 30 der Zähne 5.

Dieser Abstand 36 von der Keilspitze 37 der Keile 30 kann dabei auch ausgewählt sein aus einem Bereich mit einer unteren Grenze von 2 % und einer oberen Grenze von 15 %, einer axialen Länge 38 der Keile 30 der Zähne 5 der Innenverzahnung 4 der Schiebemuffe 2.

Es ist weiters möglich, dass sowohl der untere Kernstift 15 als auch der obere Kernstift 17 jeweils eine Ausnehmung 39, 40 aufweisen, um darin ein Zentrierelement 41 anzuordnen, sodass während der Schließbewegung des Werkzeugs, das heißt der unteren Pressform 12 und der oberen Pressform 11, die relative Stellung dieser beiden Pressformen 11, 12 zueinander zwischen den einzelnen Kalibriervorgängen beibehalten wird und damit die Genauigkeit der Ausbildung der Innenverzahnung 4 erhöht werden kann. Als Zentrierelement 41 kann dabei ein Zentrierstift, so wie in Fig. 1 dargestellt, verwendet werden und können dazu die Ausnehmungen 39,40 als Sacklochbohrungen ausgeführt sein. Ebenso besteht die Möglichkeit, auch ringförmige Zentrierelemente 41, etc. anzuordnen, wozu auch die Ausnehmungen 39, 40 entsprechend angepasst werden.

Der Wulst 23, der während des Kalibrierens an die Innenverzahnung 4 ausgebildet wird, wird in einem an das Kalibrieren anschließenden Fertigungsschritt zur Herstellung der Schiebemuffe 2 insbesondere mechanisch entfernt, beispielsweise durch Schleifen, Honen, Läppen, Räumen, Hiriterlegen (wie z.B. in der EP 0 550 877 B1 beschrieben), etc. Diese mechanische Nachbearbeitung der Innenverzahnung 4 erfolgt ohnehin im Rahmen der Herstellung der Schiebemuffe 2 um die Oberflächengüte der Innenverzahnung 4 zu verbessern, sodass also durch die Ausbildung des Wulstes 23 auf der Innenverzahnung 4 dieser Verfahrensschritt zwar verlängert wird, allerdings nicht in einem Ausmaß, dass dieser Nachteil den Vorteil während der Kalibrierung selbst zu Nichte macht,

Die Zähne 5 der Innenverzahnung 4 weisen im Querschnitt betrachtet - in axialer Richtung betrachtet - ausgehend von einem Zahnfußkreis 42 einen zumindest annähernd trapezförmigen Querschnitt auf in Form eines gleichseitigen Trapezes. Dieser Querschnitt wird in einem Mittenbereich 43 eines Zahnkörpers 44 zwischen den beiden distalen Endbereichen 28, 29, das heißt zwischen den beiden Keilen 30, 31 ausgebildet. Es sind aber auch andere Querschnitte möglich, z.B. evolventenförmige.

Im Rahmen der Erfindung ist es dabei für die Herstellung der Schiebemuffe 2 von Vorteil, wenn die Zahnfüße 45 zwischen den Zähnen 5, das heißt den Zahnkörpern 44, zumindest im Bereich des Wulstes 23 mit einem Untermaß bis zur Kalibrierung hergestellt werden, das heißt also dass der Zahnfußbereich nicht dem Sollmaß der fertigen Schiebemuffe 2 entspricht. Es wird damit erreicht, dass durch die Materialverdrängung während der Kalibrierung in den Spalt 22 der Kalibriervorrichtung 1 dieser Wulst 23 im Bereich der Zahnfüße 45 nicht bzw. nur in einem geringeren Ausmaß erzeugt wird. In der Folge ist also die mechanische Nachbearbeitung der Zahnfüße 45 einfacher durchführbar. Insbesondere ist dies von Bedeutung, da die Zahnfüße 45 schwerer mit Werkzeugen zur mechanischen Nachbearbeitung erreichbar sind.

Weiters ist es möglich, dass die Zähne 5 so für den Kalibriervorgang hergestellt werden, dass diese in axialer Richtung und / oder radialer Richtung der Schiebemuffe 2 betrachtet ein Übermaß aufweisen, also beispielsweise bis vor das Kalibrieren über Stirnflächen 46, 47 eines Muffenkörpers 48 der Schiebemuffe 2 in axialer Richtung überragen und / oder in radiale Richtung weisende Stirnflächen 49 der Zähne 5 überragen. Durch dieses Übermaß wird also im Bereich der Keile 30, 31 mehr Material für das Kalibrieren zur Verfügung gestellt, sodass während des Kalibrierens selbst eine höhere Verdichtung der Keile 30, 31 ermöglicht wird.

Das Übermaß kann dabei ausgewählt werden aus einem Bereich mit einer unteren Grenze von 1 %, insbesondere 2,5 %, und einer oberen Grenze von 30 %, insbesondere 20 %, des Sollmaßes der Abmessungen der kalibrierten Zähne 5 der Schiebemuffe 2.

Ebenso kann das Untermaß der Zahnfüße 45 ausgewählt werden aus einem Bereich mit einer unteren Grenze von 0,01 mm, insbesondere 0,1 mm, und einer oberen Grenze von 1 mm, insbesondere 0,75 mm, bezogen auf das Sollmaß der Zahnfüße 45 der Schiebemuffe 2 in radialer Richtung.

Es sei daraufhingewiesen, dass die in den Fig. 2 und 3 dargestellte Form der Zähne 5 der Innenverzahnung 4 der Schiebemuffe 2 mit den in radiale Richtung weisenden ebenen bzw. leicht gekrümmten (bei evolventenformigen Ausführungen) Stirnflächen 49 die bevorzugte Ausführungsvariante der Erfindung ist. Anstelle dieser Stirnflächen 49 besteht im Rahmen der Erfindung auch die Möglichkeit, dass die Zähne 5 der Innenverzahnung 4 der Schiebemuffe 2 in diesem Bereich der Stirnfläche 49 rund ausgeführt werden. Auch abgestufte Querschnittsformen, beispielsweise eine auf dem trapezförmigen Querschnitt des Mittenbereichs 43 des Zahnkörpers 44 aufgesetzte kegelstumpfförmige Querschnittsform ist möglich.

Wie insbesondere aus Fig. 3 ersichtlich ist, ist die Innenverzahnung 4 mit zweigeteilten Dachschrägen ausgeführt, sodass also unterhalb der Keile 30, 31 weitere Keile 50, 51 mit weiteren Keilflächen 52 bis 55 ausgebildet sind. Der Zahnfußkreis 42 ist dabei erhöht ausgebildet mit einem Abstand 56 von einer Grundfläche 57 des Muffenkörpers 48, welcher radial nach Innen weist.

In der bevorzugten Ausführungsform erfolgt die Kalibrierung, das heißt die plastische Deformation der in radialer Richtung unteren Keile 30, 31, insbesondere deren Keilflächen 32 bis 35, in einem stärkeren Ausmaß als die Keilflächen 52 bis 55 der Keile 50, 51, sodass in Verlängerung des Zahnfußkreises 42, das heißt der Zahnfüße 45, eine Absetzung 58 zwischen den einzelnen Keilflächen, also beispielsweise den Keilfläche 32 und 52 ausgebildet wird. Es kann damit wiederum eine höhere Dichte der in radialer Richtung unterhalb des Zahnfußkreises 42 angeordneten Zähne 5, das heißt jener Keilflächen 32,33, die radial weiter innen liegend ausgebildet sind, erreicht werden. Insbesondere ist dies von Vorteil, da diese Keilflächen 32 bis 35 während der Benutzung der Schiebemuffe 2 einer stärkeren Belastung ausgesetzt sind, insbesondere einer Scherbelastung.

Für die Herstellung dieser Ausführungsform der Zähne 5, das heißt der distalen Endbereiche 28,29, wird vorteilhafterweise die Außenverzahnung 20, 21 der Kernstifte 15,17 entsprechend geformt, sodass also diese Absetzung 58 ausgebildet wird.

Es besteht aber im Rahmen der Erfindung auch die Möglichkeit, dass diese endgültige Form der Zähne 5 im Bereich der distalen Endbereiche 28, 29 bereits während der Herstellung des Grünlings, also beim Pulverpressen, erzeugt wird.

Aufgrund der Ausbildung der Absetzung 58 weisen die Keile 30, 31 einen kleineren Spitzenwinkel 59 auf als die Keile 50, 51 mit einem Spitzenwinkel 60. Insbesondere kann der Spitzenwinkel 59 im Bericht zwischen 30° und 150 ° und der Spitzenwinkel 60 um bis zu ± 10° hiervon abweichen.

Generell ist dazu auszuführen, dass größere Spitzenwinkel 59, 60 bevorzugt werden, da damit bessere Standzeiten erreicht werden, da beim Pressen bzw. Entformen weniger Probleme bzgl. des Wegbrechens von Material auftreten.

In der bevorzugten Ausführungsvariante ist zwischen den Keilflächen 52 bis 55 benachbarter Zähne 5 ein Steg 61 ausgebildet, der vorzugsweise zumindest annähernd parallel oder geringfügig geneigt - der Neigungswinkel kann maximal 45° betragen - zu den Stirnflächen 46, 47 des Muffenkörpers 48 ausgerichtet ist.

Es ist weiters bevorzugt wenn die Spitzen 62, 63 - bzw. die diese Spitzen 62, 63 definierenden Kanten - der Keile 30, 31 und der Keile 50, 51 in zumindest annähernd radialer Richtung fluchtend ausgebildet sind.

Des Weiteren ist im Rahmen der Erfindung bevorzugt, wenn sämtliche Übergänge zwischen den einzelnen Flächen gerundet ausgeführt sind, wie dies insbesondere aus Fig. 3 ersichtlich ist.

Dabei können diese Rundungen einen Radius aufweisen der ausgewählt ist aus einem Bereich mit einer unteren Grenze von 0,01 mm, insbesondere 0,1 mm, und einer oberen Grenze von 1 mm, insbesondere 0,75 mm.

Es sei auch darauf hingewiesen, dass nicht erfindungswesentliche Details bei der Schiebemuffe 2, wie z.B. eine außen umlaufende Ringnut für den Eingriff einer Schaltgabel, nicht dargestellt wurden, diese jedoch bei der Schiebmuffe 2 vorhanden sein können.

Der Ordnung halber sei abschließend darauf hingewiesen, dass zum besseren Verständnis des Aufbaus der Kalibriervorrichtung 1 und der Schiebemuffe 2 diese bzw. deren Bestandteile teilweise unmaßstäblich und/oder vergrößert und/oder verkleinert dargestellt wurden.

**Bezugszeichenaufstellung**

| | | | |
|---|---|---|---|
| 1 | Kalibriervorrichtung | 41 | Zentrierelement |
| 2 | Schiebemuffe | 42 | Zahnfußkreis |
| 3 | Oberfläche | 43 | Mittenbereich |
| 4 | Innenverzahnung | 44 | Zahnkörper |
| 5 | Zahn | 45 | Zahnfuß |
| | | | |
| 6 | Ende | 46 | Stirnfläche |
| 7 | Keil | 47 | Stirnflächen |
| 8 | Gesenk | 48 | Muffenkörper |
| 9 | Innengesenk | 49 | Stirnfläche |
| 10 | Außengesenk | 50 | Keil |
| | | | |
| 11 | Pressform | 51 | Keil |
| 12 | Pressform | 52 | Keilfläche |
| 13 | Ausnehmung | 53 | Keilfläche |
| 14 | Auswerferhülse | 54 | Keilfläche |
| 15 | Kernstift | 55 | Keilfläche |
| | | | |
| 16 | Presshülse | 56 | Abstand |
| 17 | Kernstift | 57 | Grundfläche |
| 18 | Oberfläche | 58 | Absetzung |
| 19 | Oberfläche | 59 | Spitzenwinkel |
| 20 | Außenverzahnung | 60 | Spitzenwinkel |
| | | | |
| 21 | Außenverzahnung | 61 | Steg |
| 22 | Spalt | 62 | Spitze |
| 23 | Wulst | 63 | Spitze |
| 24 | Breite | | |
| 25 | Zahnlänge | | |
| | | | |
| 26 | Breite | | |
| 27 | Rand | | |
| 28 | Endbereich | | |
| 29 | Endbereich | | |
| 30 | Keil | | |
| | | | |
| 31 | Keil | | |
| 32 | Keilfläche | | |
| 33 | Keilfläche | | |
| 34 | Keilfläche | | |
| 35 | Keilfläche | | |
| | | | |
| 36 | Abstand | | |
| 37 | Keilspitze | | |
| 38 | Länge | | |
| 39 | Ausnehmung | | |
| 40 | Ausnehmung | | |

## Patentansprüche

1. Kalibriervorrichtung (1) zum Kalibrieren einer pulvermetallurgisch hergestellten, eine Innenverzahnung (4) mit axial verlaufenden Zähnen (5) aufweisende Schiebmuffe (2) für eine Getriebe-Synchronisiereinrichtung eines Schaltgetriebes, umfassend ein Gesenk (8) mit einer Ausnehmung (13) zur Aufnahme der Schiebemuffe (2), eine obere Pressform (11) und eine untere Pressform (12), die linear bewegbar in der bzw. in die Ausnehmung (13) des Gesenks (8) angeordnet sind, wobei die obere Pressform (11) und/oder die unter Pressform (12) zwischen einer Offenstellung und einer Kalibrierstellung bewegbar gehaltert sind, und wobei die untere Pressform (12) eine Auswerferhülse (14) bzw. einen Unterstempel und einen konzentrisch dazu angeordneten, relativ zur Auswerferhülse (14) bzw. dem Unterstempel bewegbaren unteren Kernstift (15), mit einer zur Innenverzahnung (4) der kalibrierten Schiebemuffe (2) komplementären Außenverzahnung (21), aufweist, **dadurch gekennzeichnet, dass** die obere Pressform (11) eine Presshülse (16) und einen konzentrisch dazu angeordneten, relativ zur Presshülse (16) bewegbaren oberen Kernstift (17), mit einer zur Innenverzahnung (4) der kalibrierten Schiebemuffe (2) komplementären Außenverzahnung (20) aufweist, wobei die Schiebemuffe (2) zwischen der Presshülse (16) und der Auswerferhülse (14) eingespannt ist bzw. verpressbar ist, und wobei in der Kalibrierstellung der obere Kernstift (15) unter Ausbildung eines Spaltes (22) beabstandet zum unteren Kernstift (15) angeordnet ist.

2. Kalibriervorrichtung (1) nach Anspruch 1, **dadurch gekennzeichnet, dass** der Spalt (22) eine Breite (24) aufweist, die ausgewählt ist aus einem Bereich mit einer unteren Grenze von 0,1 mm und einer oberen Grenze von 10 mm.

3. Kalibriervorrichtung (1) nach Anspruch 1 oder 2, **dadurch gekennzeichnet, dass** der Spalt (22) in der Kalibrierstellung bezogen auf die axiale Breite der Schiebemuffe (2) außermittig ausgebildet ist.

4. Kalibriervorrichtung (1) nach einem der Ansprüche 1 bis 3, **dadurch gekennzeichnet, dass** die Zähne (5) der Innenverzahnung (4) der Schiebemuffe (2) an distalen Endbereichen (28, 29) Keile (30, 31) mit Keilflächen (32 bis 35) aufweisen und der Spalt (22) in einem Abstand (36) zu einer axial äußeren Keilspitze (37) der Keilflächen (32, 33) eines distalen Endbereiches (28) der Zähne (5) angeordnet ist, der ausgewählt ist aus einem Bereich mit einer unteren Grenze von 1 mm und einer oberen Grenze von 20 mm.

5. Kalibriervorrichtung (1) nach einem der Ansprüche 1 bis 4, **dadurch gekennzeichnet, dass** sowohl im oberen als auch im unteren Kernstift (15, 17) eine Ausnehmung (39, 40) zur Aufnahme eines Zentrierelementes (41) angeordnet ist.

6. Verfahren zum Kalibrieren einer pulvermetallurgisch hergestellten, eine Innenverzahnung (4) mit axial verlaufenden Zähnen (5) aufweisende Schiebmuffe (2) für eine Getriebe-Synchronisiereinrichtung eines Schaltgetriebes durch teilweise plastische Umformung, wobei die Zähne (5) einen Zahnkörper (44) mit jeweils zwei, Keile (30, 31) mit Keilflächen (32 bis 35) aufweisende distale Endbereiche (28, 29) aufweist, insbesondere unter Verwendung einer Kalibriervorrichtung (1) nach einem der Ansprüche 1 bis 5, **dadurch gekennzeichnet, dass** das während der plastischen Umformung verdrängte Material in einen Mittenbereich zwischen den distalen Endbereichen (28, 29) des Grundkörpers der Zähne (5) verbracht wird, sodass die Zähne (5) in diesem Bereich mit einem Wulst (23) ausgebildet werden, und dass daran anschließend eine, insbesondere mechanische, Nachbearbeitung zur Entfernung des Wulstes (23) durchgeführt wird.

7. Verfahren nach Anspruch 6, **dadurch gekennzeichnet, dass** der Wulst (23) bezüglich einer axialen Zahnlänge (25) der Zähne (5) außermittig auf diesen ausgeformt wird.

8. Verfahren nach Anspruch 6 oder 7, **dadurch gekennzeichnet, dass** der Wulst (23) in einem Abstand (36) zu einer Keilspitze (37) der Keilflächen (32, 33) eines distalen Endbereiches (28) der Zähne (5) ausgebildet wird, der ausgewählt wird aus einem Bereich mit einer unteren Grenze von 1 mm und einer oberen Grenze von 20 mm.

9. Verfahren nach einem der Ansprüche 6 bis 8, **dadurch gekennzeichnet, dass** zwischen den Zähnen (5) bekanntlich Zahnfüße (45) ausgebildet werden, und dass die Zahnfüße (45) zumindest im Bereich der Ausformung der Wülste (23) auf dem Zahnkörper (44) der Zähne (5) mit einem vordefinierbaren Untermaß bereitgestellt werden.

10. Verfahren nach einem der Ansprüche 6 bis 9, **dadurch gekennzeichnet, dass** die Kalibrierung an Zähnen (5) durchgeführt wird, die in den distalen Endbereichen (28, 29) ein axiales und/oder radiales Übermaß aufweisen.

11. Verfahren nach einem der Ansprüche 6 bis 10, **dadurch gekennzeichnet, dass** für das Kalibrieren ein Schiebemuffenrohling bereitgestellt wird, dessen Zahnfußkreis (42) erhöht ausgebildet ist, sodass in radialer Richtung oberhalb der Keilflächen (32 bis 35) der Keile (30, 31) der Innenverzahnung (4) Nebenflächen mit weiteren Keilflächen (52 bis 55) von weiteren Keilen (50, 51) angeordnet sind, und dass beim Kalibrieren die Keilflächen (32 bis 35) der Innenverzahnung (4) stärker plastisch verformt bzw. ausschließlich diese Keilflächen (32 bis 35) plastisch verformt werden, und damit die Zähne (5) der Innenverzahnung (4) mit einem kleineren Spitzenwinkel (59) der Keilspitzen ausgebildet werden als der Spitzenwinkel (60) der Keilflächen (52 bis 55) der Nebenflächen.

12. Verfahren nach Anspruch 11, **dadurch gekennzeichnet, dass** die weiteren Keilflächen (52 bis 55) der Nebenflächen trapezförmig ausgebildet werden.

13. Verfahren nach Anspruch 11 oder 12, **dadurch gekennzeichnet, dass** zwischen den weiteren Keilen (50, 51) oberhalb des Zahnfußkreises (42) im Bereich der Zahnfüße (44) der Innenverzahnung (4) Stege (61) ausgebildet werden.

14. Verfahren nach einem der Ansprüche 11 bis 13, **dadurch gekennzeichnet, dass** die weiteren Keile (50, 51) einen Spitzenwinkel (60) zwischen den beiden Keilflächen (52, 53 bzw. 54, 55) aufweisen, der ausgewählt ist aus einem Bereich mit einer unteren Grenze von 50 ° und einer oberen Grenze von 150 °.

15. Verfahren nach einem der Ansprüche 11 bis 14, **dadurch gekennzeichnet, dass** die Spitzen (62) bzw. die Spitzenkanten der Keile (30, 31) der jeweils in radialer Richtung unterhalb des Zahnfußkreises (42) angeordneten Keile (30, 31) mit den Spitzen (63) bzw. den Spitzenkanten der Keile (50, 51) der jeweils oberhalb des Zahnfußkreises (42) angeordneten Keile (50, 51) in zumindest annähernd radialer Richtung fluchtend ausgebildet werden.

16. Verfahren nach einem der Ansprüche 11 bis 15, **dadurch gekennzeichnet, dass** sämtliche Übergänge zwischen den einzelnen Flächen gerundet ausgeführt werden.

17. Verfahren nach Anspruch 16, **dadurch gekennzeichnet, dass** die Rundungen zwischen den Flächen mit einem Radius ausgeführt werden, der ausgewählt ist aus einem Bereich mit einer unteren Grenze von 0,01 mm und einer oberen Grenze von 1 mm.

## Claims

1. Calibration device (1) for calibrating a sliding sleeve (2) produced by powder metallurgy, having an inner toothing (4) with axially running teeth (5) for a transmission synchronization device of a manual transmission, comprising a die (8) having a recess (13) for receiving the sliding sleeve (2), an upper press mould (11) and a lower press mould (12) which are disposed linearly movably in the or into the recess (13) of the die (8), wherein the upper press mould (11) and/or the lower press mould (12) are held movably between an open position and a calibration position, and wherein the lower press mould (12) comprises an ejector sleeve (14) or a lower punch and a lower core pin (15) arranged concentrically thereto and movable relative to the ejector sleeve (14) or the lower punch, having an outer toothing (21) complementary to the inner toothing (4) of the calibrated sliding sleeve (2), **characterized in that** the upper press mould (11) comprises a press sleeve (16) and an upper core pin (17) arranged concentrically thereto and movable relative to the press sleeve (16) having an outer toothing (20) complementary to the inner toothing (4) of the calibrated sliding sleeve (2), wherein the sliding sleeve (2) is clamped or can be pressed between the press sleeve (16) and the ejector sleeve (14) and wherein in the calibration position the upper core pin (17) is arranged at a distance from the lower core pin (15) forming a gap (22).

2. The calibration device (1) according to claim 1, **characterized in that** the gap (22) has a width (24) which is selected from a range having a lower limit of 0.1 mm and an upper limit of 10 mm.

3. The calibration device (1) according to claim 1 or 2, **characterized in that** the gap (22) in the calibration position is configured to be off-centre relative to the axial width of the sliding sleeve (2).

4. The calibration device (1) according to any one of claims 1 to 3, **characterized in that** the teeth (5) of the inner toothing (4) of the sliding sleeve (2) comprise wedges (30, 31) with wedge faces (32 to 35) on distal end regions (28, 29) and the gap (22) is arranged at a distance (36) from an axially outer wedge tip (37) of the wedge faces (32, 33) of a distal end region (28) of the teeth (5) which is selected from a range having a lower limit of 1 mm and an upper limit of 20 mm.

5. The calibration device (1) according to any one of claims 1 to 4, **characterized in that** a recess (39, 40) for receiving a centring element (41) is arranged both in the upper and in the lower core pin (15, 17).

6. Method for calibrating a sliding sleeve (2) produced by powder metallurgy, having an inner toothing (4) with axially running teeth (5) for a transmission synchronization device of a manual transmission by partial plastic deformation, wherein the teeth (5) comprise a toothed body (44) with two distal end regions (28, 29) each comprising wedges (30, 31) with wedge faces (32 to 35), in particular using a calibration device (1) according to one of claims 1 to 5, **characterized in that** the material expelled during the plastic deformation is brought into a central region between the distal end regions (28, 29) of the base body of the teeth (5) so that the teeth (5) are formed in this region with a protuberance (23), and that then an, in particular mechanical remachining is carried out to remove the protuberance (23).

7. The method according to claim 6, **characterized in that** the protuberance (23) is formed relative to an axial tooth length (25) of the teeth (5) off-centrally thereon.

8. The method according to claim 6 or 7, **characterized in that** the protuberance (23) is formed at a distance (36) from a wedge tip (37) of the wedge faces (32, 33) of a distal end region (28) of the teeth (5) which is selected from a range having a lower limit of 1 mm and an upper limit of 20 mm.

9. The method according to any one of claims 6 to 8, **characterized in that** tooth bases (45) are known to be formed between the teeth (5) and that the tooth bases (45) are provided with a predefined undersize at least in the region of the protuberance (23) on the tooth body (44) of the teeth (5).

10. The method according to any one of claims 6 to 9, **characterized in that** the calibration is performed on teeth (5) which have an axial and/or radial oversize in the distal end regions (28, 29).

11. The method according to any one of claims 6 to 10, **characterized in that** a sliding sleeve blank is provided for the calibration, the tooth base circle (42) whereof is configured to be increased so that in the radial direction, auxiliary faces with further wedge faces (52 to 55) of further wedges (50, 51) are arranged above the wedge faces (32 to 35) of the wedges (30, 31) of the inner toothing (4) and that during calibration the wedge faces (32 to 35) of the inner toothing (4) are more strongly plastically deformed or exclusively these wedge faces (32 to 35) are plastically deformed and thus the teeth (5) of the inner toothing (4) are formed with a smaller acute angle (59) of the wedge tips than the acute angle (60) of the wedge faces (52 to 55) of the auxiliary faces.

12. The method according to claim 11, **characterized in that** the further wedge faces (52 to 55) of the auxiliary faces are configured to be trapezoidal.

13. The method according to claim 11 or 12, **characterized in that** webs (61) are formed between the further wedges (50, 51) above the tooth base circle (42) in the region of the tooth bases (44) of the inner toothing (4).

14. The method according to any one of claims 11 to 13, **characterized in that** the further wedges (50, 51) have an acute angle (60) between the two wedge surfaces (52, 53 or 54, 55) which is selected from a range having a lower limit of 50° and an upper limit of 150°.

15. The method according to any one of claims 11 to 14, **characterized in that** the tips (62) or the tip edges of the wedges (30, 31) of the wedges (30, 31) each arranged in the radial direction below the tooth base circle (42) are configured to be aligned with the tips (63) or the tip edges of the wedges (50, 51) of the wedges (50, 51) each arranged above the tooth base circle (42) in at least approximately the radial direction.

16. The method according to any one of claims 11 to 15, **characterized in that** all the transitions between the individual faces are rounded.

17. The method according to claim 16, **characterized in that** the roundings between the faces are designed with a radius which is selected from a range having a lower limit of 0.01 mm and an upper limit of 1 mm.

## Revendications

1. Dispositif d'étalonnage (1) pour étalonner un manchon coulissant (2) réalisé par métallurgie des poudres et comprenant une denture intérieure (4) avec des dents (5) s'étendant axialement, pour un dispositif de synchronisation d'engrenage d'une boîte de vitesses, comportant une matrice (8) avec un évidement (13) pour recevoir le manchon coulissant (2), un moule de pressage supérieur (11) et un moule de pressage inférieur (12) qui sont déplaçables linéairement respectivement dans le et vers l'évidement (13) de la matrice (8), le moule de pressage supérieur (11) et/ou le moule de pressage inférieur (12) étant montés mobiles entre une position ouverte et une position d'étalonnage, et le moule de pressage inférieur (12) comprenant une douille d'éjection (14) ou un poinçon inférieur et une tige centrale inférieure (15) disposée de manière concentrique par rapport à celui-ci et déplaçable par rapport à la douille d'éjection (14) ou le poinçon inférieur et ayant une denture extérieure (21) complémentaire à la denture intérieure (4) du manchon coulissant (2) étalonné, **caractérisé en ce que** le moule supérieur de pressage (11) comprend une douille de pressage (16) et une tige centrale supérieure (17) disposée de manière concentrique par rapport à la douille de pressage (16) et déplaçable par rapport à celle-ci, avec une denture extérieure (20) complémentaire à la denture intérieure (4) du manchon coulissant (2) étalonné, le manchon coulissant (2) pouvant être serré ou pressé entre la douille de pressage (16) et la douille d'éjection (14), et la tige centrale supérieure (17) étant disposée, dans la position d'étalonnage, espacée de la tige centrale inférieure (17) et formant une fente (22).

2. Dispositif d'étalonnage (1) selon la revendication 1, **caractérisé en ce que** la fente (22) présente une largeur (24) qui est choisie dans une plage ayant une limite inférieure de 0,1 mm et une limite supérieure de 10 mm.

3. Dispositif d'étalonnage (1) selon la revendication 1 ou 2, **caractérisé en ce que**, en position d'étalonnage, par rapport à la largeur axiale du manchon coulissant (2), la fente (22) est formée non médiane.

4. Dispositif d'étalonnage (1) selon l'une des revendications 1 à 3, **caractérisé en ce que** les dents (5) de la denture intérieure (4) du manchon coulissant (2) sont pourvues, dans des zones d'extrémité distales (28, 29), de coins (30, 31) ayant des surfaces de coin (32 à 35) et **en ce que** la fente (22) est disposée à une distance (36) d'une pointe de coin axialement extérieure (37) des surfaces de coin (32, 33) d'une zone d'extrémité distale (28) des dents (5) qui est choisie dans une plage ayant une limite inférieure de 1 mm et une limite supérieure de 20 mm.

5. Dispositif d'étalonnage (1) selon l'une quelconque des revendications 1 à 4, **caractérisé en ce que**, aussi bien dans la tige centrale supérieure que dans la tige centrale inférieure (15, 17), un évidement (39, 40) pour la réception d'un élément de centrage (41) est disposé.

6. Procédé pour étalonner un manchon coulissant (2) réalisé par métallurgie des poudres et comprenant une denture intérieure (4) avec des dents (5) s'étendant axialement, pour un dispositif de synchronisation d'engrenage d'une boîte de vitesses, par transformation plastique partielle, les dents (5) comportant un corps de dent (44) ayant chacun deux zones d'extrémité distales (28, 29) pourvues de coins (30, 31) ayant des surfaces de coin (32 à 35), notamment en utilisant un dispositif d'étalonnage (1) selon l'une quelconque des revendications 1 à 5, **caractérisé en ce que** la matière chassée pendant la transformation plastique est transférée vers une zone médiane entre les zones d'extrémité distales (28, 29) du corps de base des dents (5) de façon que les dents (5) soient formées dans cette zone avec un bourrelet (23) et **en ce qu'**ensuite, un ré-usinage notamment mécanique est effectué pour enlever le bourrelet (23).

7. Procédé selon la revendication 6, **caractérisé en ce que**, par rapport à une longueur de dent axiale (25) des dents (5), le bourrelet (23) est formé sur celles-ci de façon non médiane.

8. Procédé selon la revendication 6 ou 7, **caractérisé en ce que** le bourrelet (23) est formé à une distance (36) d'une pointe de coin (37) des surfaces de coin (32, 33) d'une zone d'extrémité distale (28) des dents (5) qui est choisie dans une plage ayant une limite inférieure de 1 mm et une limite supérieure de 20 mm.

9. Procédé selon l'une quelconque des revendications 6 à 8, **caractérisé en ce que**, comme il est connu, des bases de dents (45) sont formées entre les dents (5) et **en ce que** les bases de dents (45) sont prévues, au moins dans la zone de formation des bourrelets (23) sur le corps de dent (44) des dents (5), avec une sous-cote définissable au préalable.

10. Procédé selon l'une quelconque des revendications 6 à 9, **caractérisé en ce que** l'étalonnage est effectué sur des dents (5) qui présentent, dans les zones d'extrémité distales (28, 29), une surcote axiale et/ou radiale.

11. Procédé selon l'une quelconque des revendications 6 à 10, **caractérisé en ce que**, pour l'étalonnage, est mise à disposition une ébauche de manchon coulissant dont le cercle des bases de dents (42) est formé surélevé de façon que, en direction radiale au-dessus des surfaces de coin (32 à 35) des coins (30, 31) de la denture intérieure (4), des surfaces accessoires avec des surfaces de coin supplémentaires (52 à 55) de coins supplémentaires (50, 51) sont disposées et **en ce que**, lors de l'étalonnage, les surfaces de coin (32 à 35) de la denture intérieure (4) sont déformées plastiquement de manière plus importante ou qu'exclusivement ces surfaces de coin (32 à 35) sont déformées plastiquement, et **en ce que**, de cette manière, les dents (5) de la denture (4) sont formées avec un angle de pointe (59) plus petit des pointes de coin que l'angle de pointe (60) des surfaces de coin (52 à 55) des surfaces accessoires.

12. Procédé selon la revendication 11, **caractérisé en ce que** les surfaces de coin (52 à 55) supplémentaires des surfaces accessoires sont formées en forme de trapèze.

13. Procédé selon la revendication 11 ou 12, **caractérisé en ce que** des ponts (61) sont formés entre les coins supplémentaires (50, 51) au-dessus du cercle des bases de dents (42) dans la zone des bases de dents (45) de la denture intérieure (4).

14. Procédé selon l'une quelconque des revendications 11 à 13, **caractérisé en ce que** les coins supplémentaires (50, 51) présentent un angle de pointe (60) entre les deux surfaces de coin (respectivement 52, 53 ou 54, 55) qui est choisi dans une plage ayant une limite inférieure de 50° et une limite supérieure de 150°.

15. Procédé selon l'une quelconque des revendications 11 à 14, **caractérisé en ce que** les pointes (62), ou les bords de pointe des coins (30, 31), des coins (30, 31) disposés chacun en direction radiale en-dessous du cercle des bases de dents (42) sont formées alignées, en direction au moins approximativement radiale, avec les pointes (63), ou les bords de pointe des coins (50, 51), des coins (50, 51) disposés chacun en direction radiale au-dessus du cercle des bases de dents (42).

16. Procédé selon l'une quelconque des revendications 11 à 15, **caractérisé en ce que** toutes les transitions entre les différentes surfaces sont réalisées arrondies.

17. Procédé selon la revendication 16, **caractérisé en ce que** les arrondis entre les surfaces sont réalisés avec un rayon qui est choisi dans une plage ayant une limite inférieure de 0,01 mm et une limite supérieure de 1 mm.
